# EUROPEAN PATENT SPECIFICATION

(11) **EP 0 455 889 B1**
(45) Date of publication and mention of the grant of the patent: **08.03.1995**
(21) Application number: 90125494.6
(22) Date of filing: 27.12.1990
(51) Int. Cl.: A23K 1/10, A23N 17/00, A23K 1/04, A23K 3/00, A23J 1/00, B01B 1/00

(54) **Process and system for reclaiming and concentrating selected or combined waste products of the farming,food and butchering industries**
Verfahren und Einrichtung zur Rückforderung und Konzentrierung von ausgewählten oder kombinierten Abfallprodukten der landwirtschaftlichen Industrie, der Nahrungsmittelindustrie oder der Schlachtindustrie
Procédé et système de récupération et de concentration de déchets sélectionnés ou combinés de l'industrie agricole, de l'industrie alimentaire ou de l'industrie de la viande

(30) Priority: 05.04.1990 IT 343190
(43) Date of publication of application: 13.11.1991
(73) Proprietor: FINSAI S.r.l., I-40125 Bologna (IT)
(72) Inventor: Ferranti, Claudio, I-44047 Sant'Agostino (IT)
(74) Representative: Jorio, Paolo, Dr. Ing.

(56) References cited:
- WO-A-81/01943
- DE-A- 3 608 282
- GB-A- 1 046 642
- GB-A- 1 316 042
- JP-A-63 126 463
- US-A- 3 272 632
- US-A- 3 288 825
- US-A- 4 216 234
- US-A- 4 505 936
- US-A- 4 645 676
- PATENT ABSTRACTS OF JAPAN, vol. 13, no. 595 (C-672)[3943], 27th December 1989; & JP-A-1 252 243 (SHUZO NAKAZONO) 06-10-1989
- PATENT ABSTRACTS OF JAPAN, vol. 8, no. 19 (C-207)[1456], 26th January 1984; & JP-A-58 187 148 (SHIYUUZOU NAKAZONO) 01-11-1983

## Description

The present invention relates to a process for reclaiming and concentrating selected or combined waste products of the farming, food and butchering industries.

The present invention also relates to a system implementing such a process, and the end product of which may conveniently be employed as a high-protein and/or high-vegetable-fiber integrator for animal food.

A major problem we are currently faced with is the disposal of waste products of the farming, food and butchering industries, which, due to their high enzyme content, are subject to rapid decay accompanied by the formation of ill-smelling gas and decaying matter. The disposal of such waste therefore involves serious health and environment hazards, such as the diffusion of viruses and bacteria and the "poisoning" of farmland.

Specialist, often high-price, firms exist for collecting such waste at the source, e.g. for collecting blood from slaughtering plants, which is either transported to a purifying plant where it is destroyed, or to a drying plant where it is dried and recycled for use in animal food.

Existing drying plants include high-temperature autoclaves, hot-air rotary driers, fluidized bed and spray driers, all of which invariably involve serious air and water pollution problems. In an autoclave system, part of the product is disposed of in water; whereas the others provide for disposal in air and, in view of the enormous quantities of air involved, require massive purifying facilities. Moreover, all the above systems involve high running costs, which are obviously borne by the meat producing industry and passed on to the consumer.

Collecting firms for other types of waste, such as stomach content, are more difficult to find, so that, whereas the liquid content may be transported to a purifying plant, the solid content is often disposed of illegally as fertilizer with all the health risks this involves. Moreover, if for any reason the waste from a slaughtering plant fails to be collected daily, the plant must be shut down until normal service is resumed.

As described herein, the process according to the present invention may also be conveniently employed for concentrating fresh fodder, which is currently dried the traditional way, on the ground; stored in silos; or mechanically dried. Traditional drying results in product and biological value losses of around 20-30%, or even higher in bad weather. As for ensilage, product and biological value losses are caused by difficulty in providing for correct fermentation of the product. In addition to the above losses, mechanical drying also involves considerable running costs.

A prior process for treating waste products is disclosed in US-A-3,272,632, regarding the conversion of poultry wastes into nutritious products, wherein the waste products, after possible grounding or chopping, are cooked with hot oil to dehydrate them, then oil is separated and recycled. A further prior process is disclosed in JP-A-1-252,243, wherein animal or vegetable residues are cooked in hot oil and dehydrated and then separated from the oil. A further prior process is described in JP-A-63126463 wherein, to obtain a feed for pisciculture, an aqueous solution is mixed with bean curd refuse and cooked with oil under vacuum to evaporate air in the mixture. Thereafter, the mixture is deoiled.

Furthermore, a prior art system is disclosed in US-A-3,288,825 which discloses the features reported in the preamble of claim 6.

The aim of the present invention is to provide a process for reclaiming and concentrating selected or combined waste products of the farming, food and butchering industries, designed to overcome the above disposal problems.

A further aim of the present invention is to provide a low running cost system implementing said process.

Further aims and advantages of the present invention will be made clear in the following description.

With this aim in view, according to the present invention, there is provided a process for reclaiming and concentrating selected or combined waste products of the farming, food and butchering industries, as defined in claim 1.

According to the present invention, there is also provided a system for reclaiming and concentrating selected or combined waste products of the farming, food and butchering industries, as defined in claim 6.

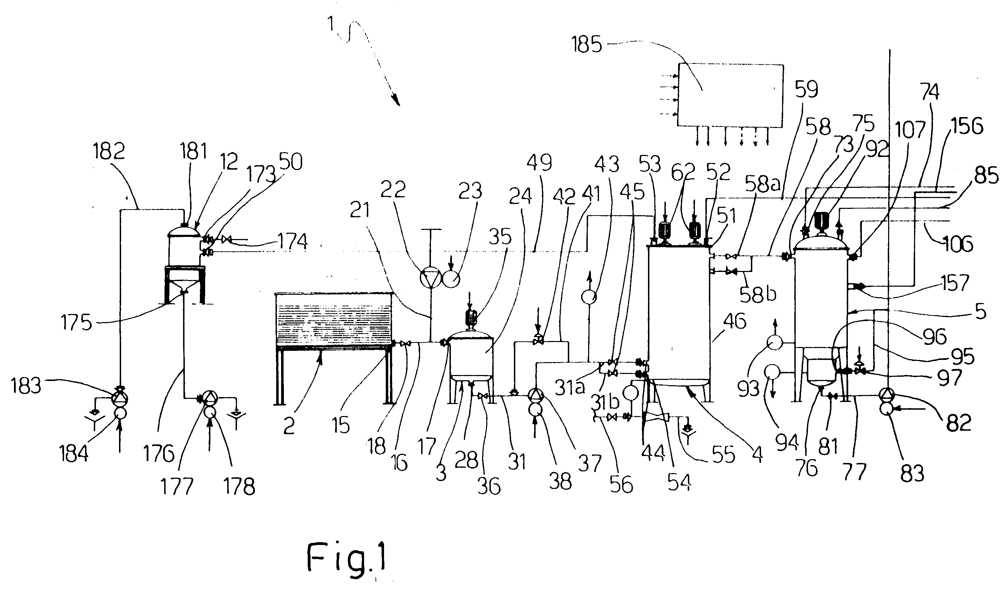

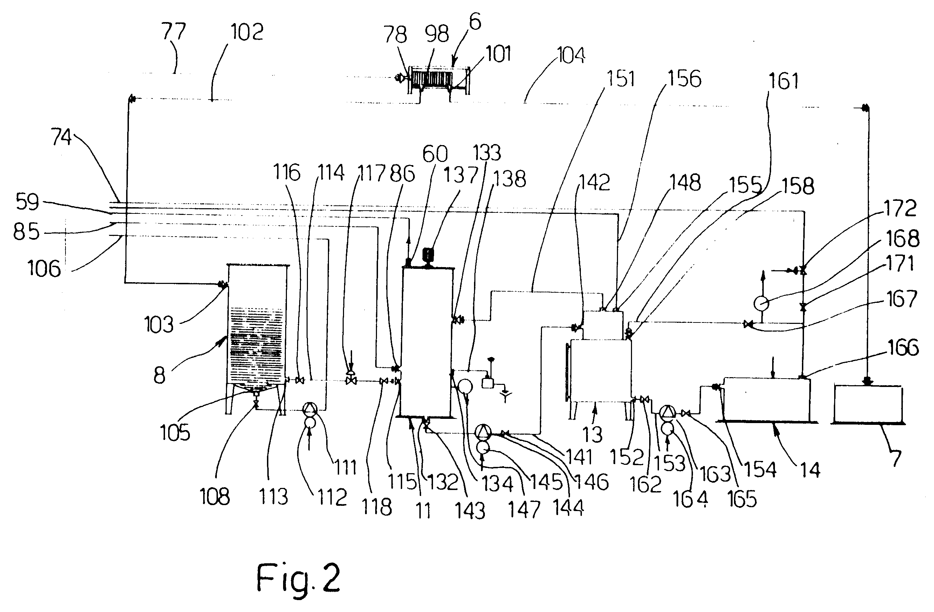

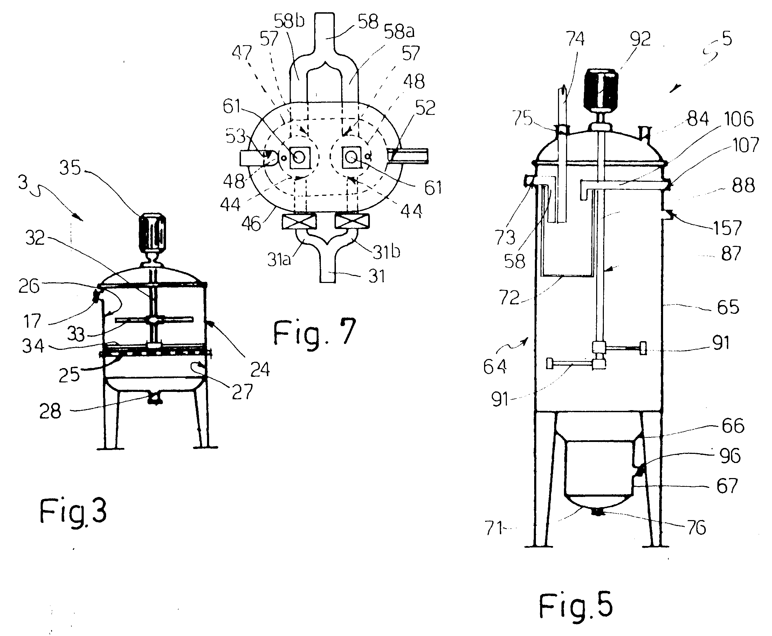

The process and a non-limiting embodiment of the system according to the present invention will be described by way of example with reference to the accompanying drawings, in which:
Fig.s 1 and 2 show schematic views of two parts of the system according to the present invention;
Fig.s 3 to 6 show sections of respective components on the Fig.1 and 2 system;

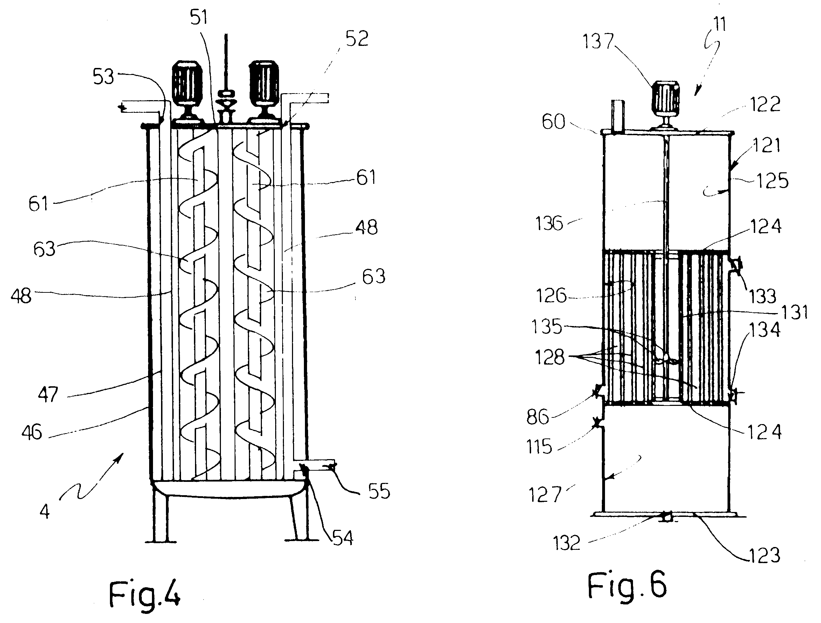

Fig.7 shows a plan view of the Fig.4 component.

Number 1 in Fig.s 1 and 2 indicates a system for reclaiming and concentrating selected or combined waste products of the farming, food and butchering industries.

As described hereinafter, system 1 provides for producing a high-protein integrator for animal food, in addition to solving in loco (no transport) the waste disposal problems of the plant at which it is installed.

Though relating specifically to the reclaiming and concentration of animal blood, system 1 illustrated herein differs only slightly from those employed for reclaiming and concentrating other types of waste or for concentrating fresh fodder. The description of system 1 therefore also applies to these systems, to which specific reference will occasionally be made.

As shown in Fig.s 1 and 2, system 1 comprises:
a tank 2 for the original product;
a device 3 for filtering and homogenizing the original product;
a device 4 for preheating the original product;
a device 5 for cooking and mixing the product in vegetable oil, for evaporating part of the water in the product and so concentrating the same;
a filtering device 6 for separating the concentrated product and vegetable oil;
a tank 7 for the concentrated product;
a tank 8 for the oil removed from the concentrated product;
an oil dehydrating device 11;
a condenser 12 for condensing the steam removed from the oil by device 11;
a hot oil tank 13; and
an oil heating device 14.

If the product is solid or semiliquid, tank 2 is replaced by a mixer into which the product and a given amount of vegetable oil are loaded, and which provides for crushing and homogenizing the product, and removing any foreign objects ingested and forming part of the animal's stomach content.

Tank 2 presents an outlet 15 from which extends a conduit 16 for feeding the product to the inlet 17 of device 3. Immediately downstream from outlet 15, conduit 16 presents a flow regulating valve 18, usually hand-operated. Conduit 16 is connected to a conduit 21 for supplying conduit 16 with a given quantity of sulphuric acid (H2S04) drawn from a tank (not shown) by a metering pump 22 powered by an electric, preferably variable-speed, motor 23. The addition of sulphuric acid is required for providing a product pH of 4 (acid environment) which, according to laboratory tests, prevents animal blood products from coagulating and assists filtration, i.e. separation of the vegetable oil from the concentrated product. Laboratory tests in a basic environment resulted in an end product in the form of flakes retaining an excessive amount of vegetable oil.

As shown in Fig.s 1 and 3, device 3 first homogenizes the product, i.e. removes any remaining clots, after which the product is filtered. Device 3 comprises a substantially cylindrical container 24, normally formed in a number of coaxial pieces fitted together, and divided by a central filtering plate 25 into an upper chamber 26 and a lower chamber 27. Upper chamber 26 presents inlet 17, and lower chamber 27 an outlet 28 to which is connected a conduit 31 for feeding the product to device 4. In upper chamber 26, the product is mixed and spread continually over the upper surface of filtering plate 25 by means of a coaxial rotary shaft 32 fitted centrally with mixing blades 33 and on the bottom end with spreader blades 34.

Shaft 32 extends upwards beyond container 24, and is connected mechanically to the output shaft of an electric motor 35. Immediately downstream from outlet 28, conduit 31 presents a valve 36, similar to valve 18, and a pump 37 powered by an electric motor 38.

Downstream from pump 37, conduit 31 is branch connected to a recirculating conduit 41, which connects up to main conduit 31 upstream from pump 37, and is fitted with a regulating valve 42 powered electrically as described later on. Downstream from conduit 41, conduit 31 presents a tap for a pH sensor 43. Downstream from said tap, conduit 31 branches into two portions 31a and 31b, each connected to a respective inlet 44 on device 4, and each fitted with a valve 45 similar to valve 18.

As shown in Fig.s 1, 4 and 7, device 4 preheats the product using, for energy saving purposes, the steam fed from device 11 to condenser 12. Device 4 comprises a vertical outer body 46 having a substantially elliptical horizontal section and housing an inner body 47 of the same shape, in turn housing two vertical, parallel cylinders 48. The inside of cylinders 48 is sealed hydraulically in known manner from the inside of body 47. The product to be concentrated and reclaimed is circulated inside cylinders 48, while steam is circulated inside body 47. In other words, device 4 acts as a heat exchanger. The top cover plate 51 of body 47 presents a steam inlet 52 and a steam outlet 53. Outlet 53 is fitted with a conduit 49 connected to the inlet 50 of condenser 12, while inlet 52 is fitted with a conduit 59 extending from the outlet 60 of device 11.

The bottom portion of body 47 presents a further outlet 54 for condensate, which is drained off via a conduit 55 to which is connected a water conduit 56, the supply of which is regulated by a valve 69 similar to valve 18.

Each cylinder 48 presents an inlet 44 at the bottom and, at the top, an outlet 57 to which are connected respective conduit portions 58a and 58b which eventually join to form a single conduit 58. Each cylinder 48 houses a coaxial rotary shaft 61 extending beyond plate 51 and connected mechanically to the output shaft of a respective electric motor 62. The portion of each shaft 61 inside cylinder 48 presents a helical screw 63 for channelling the product from inlets 44 to outlets 57, while at the same time blending it to obtain an even temperature.

As shown in Fig.s 1 and 5, device 5 provides for evaporating part of the water in the product and so concentrating the same. Device 5 comprises a hollow body 64 defined by a cylindrical upper portion 65, a much shorter, truncated-cone-shaped intermediate portion 66, and a short lower portion 67 smaller in diameter than upper portion 65. Body 64 also comprises a convex top cover 68 and a convex bottom wall 71. Portion 65 houses a container or pan 72 fed continually with vegetable oil at a temperature of around 120°C and the product channelled along conduit 58 at a temperature of around 40°C. The product is cooked inside container 72 and, in the case of animal blood, forms lumps which overflow the top edge of container 72. Through an inlet 73 formed in the top end of portion 65, conduit 58 is fitted inside body 64 and comes out inside container 72. The hot oil (120°C) is fed along a conduit 74 which, through an inlet 75 formed in cover 68, is fitted inside body 64 and comes out inside container 72. Bottom wall 71 presents an outlet 76 for the concentrated product and oil overflowing the top edge of container 72. Outlet 76 presents a conduit 77 connected to an inlet 78 formed on filtering device 6, and fitted with a valve 81, similar to valve 18, and a pump 82 powered by an electric motor 83.

The steam produced by boiling the product in the vegetable oil is exhausted from body 64 through an outlet 84 formed in cover 68 and which presents a conduit 85 connected to an inlet 86 on device 11. Inside body 64, the concentrated product is mixed by a member 87 comprising a rotary shaft 88 fitted with mixing blades 91 and extending, coaxially with body 64, beyond cover 68 where it is connected mechanically to the output shaft of an electric motor 92. Device 5 also presents a sensor 93 (Fig.1) for detecting the temperature inside body 64, and a system for regulating the level of the concentrated product inside the same.

Said system presents a level sensor 94 and a recirculating conduit 95 branch connected to conduit 77 downstream from pump 82 and connected to an inlet 96 formed in lower portion 67 of body 64. Conduit 95 is fitted with a valve 97 similar to valve 42. If the product for processing consists of rumina, device 5 provides solely for evaporation and producing a product in the form of paste.

With reference to Fig.2, device 6 provides for separating the oil from the concentrated product, and may be of various types depending on the type of product being processed. In Fig.2, for example, device 6 is shown schematically as featuring a filter press, which may conveniently be replaced by a decanter or filtering belt. Regardless of which type is employed, device 6 presents an oil outlet 98 and an outlet 101 for the concentrated product. Outlet 98 presents a conduit 102 connected to an inlet 103 on tank 8. Outlet 101 presents a conduit 104 for feeding the concentrated product (with a humidity percentage of usually 30 to 70 percent) into tank 7 from which it is mixed with other components for forming animal food.

With reference to Fig.2, tank 8 consists simply of an oil storage tank large enough to allow any sediment remaining in the oil to settle on the bottom. Tank 8 presents an outlet 105 formed in the bottom wall and fitted with a conduit 106 for feeding said sediment to device 5. Through an inlet 107 (Fig.5) formed in portion 65 of body 64, conduit 106 is fitted inside body 64 and comes out inside container 72. Along conduit 106, there are provided a valve 108, similar to valve 18, and a pump 111 powered by an electric motor 112. Above said bottom wall, tank 8 presents an outlet 113 fitted with a conduit 114 connected to an inlet 115 on device 11 and fitted with two valves 116 and 118, similar to valve 18, and a valve 117 similar to valve 42.

With reference to Fig.s 2 and 6, device 11 provides for extracting steam from the oil supplied from tank 8, and comprises a hollow cylindrical body 121 closed at the top and bottom by respective plates 122 and 123. Body 121 houses two parallel plates 124 defining an upper chamber 125, a central chamber 126 and a lower chamber 127. Central chamber 126 is sealed hydraulically in relation to chambers 125 and 127, which communicate with each other via a number of pipes 128 fitted through central chamber 126 and equally spaced about the edges of plates 124. Chambers 125 and 127 also communicate hydraulically via a pipe 131 larger in diameter than pipes 128 and also supported on plates 124, but coaxially with body 121.

Lower chamber 127 presents inlet 115 formed close to bottom plate 124 for the undehydrated oil; and a dehydrated oil outlet 132 formed in bottom cover plate 123. Upper chamber 125 presents steam outlet 60 formed in top cover plate 122. Central chamber 126 presents inlet 86 for the steam from device 5; an inlet 133 for additional steam from tank 13; and a condensate outlet 134. The steam fed into central chamber 126 therefore does not mix with the oil or the steam inside the other chambers 125, 127.

The oil fed into chamber 127 is fed along pipes 128 into chamber 125 and back down along central pipe 131. As the oil is recycled along pipes 128, it is effectively heated by the steam inside central chamber 26, so as to extract any steam in the oil, which is exhausted through outlet 60. The oil is recirculated by blades 135 fitted to a rotary shaft 136 coaxial with body 121 and extending upwards beyond cover plate 122 where it is connected mechanically to the output shaft of an electric motor 137. Shaft 136 extends inside central pipe 131 where it is fitted with blades 135.

Outlet 134 presents a conduit 138 for draining condensate. Outlet 132 presents a conduit 141 connected to the inlet 142 of tank 13 and fitted with a valve 143, a pump 144 powered by an electric motor 145, and a valve 146. Valves 143 and 146 are similar to valve 18. Device 11 also comprises a sensor 147 for detecting the oil level in body 121.

As shown in Fig.2, tank 13 presents:
inlet 142 for the oil from device 11;
a steam outlet 148 connected by a conduit 151 to inlet 133 in central chamber 126 of body 121;
an oil outlet 152 connected by a conduit 153 to an inlet 154 on device 14;
an inlet 155 for receiving overflow oil from body 64 of device 5 via a conduit 156 connected to outlet 157 in body 64; and
a hot oil inlet 158 connected to a conduit 161.

Conduit 153 is fitted with a valve 162, a pump 163 powered by an electric motor 164, and a valve 165.

Valves 162 and 165 are similar to valve 18.

As shown in Fig.2, device 14 is simply a known device for heating the oil to a predetermined temperature for use in device 5, and presents inlet 154 and an outlet 166 connected to conduit 74 for feeding the hot oil into container 72 of device 5. Conduit 161 is branch connected to conduit 74 immediately downstream from outlet 166, so as to continually recirculate at least part of the oil between tank 13 and device 14. Conduit 161 is fitted with a valve 167 similar to valve 18, and an oil temperature sensor 168. Immediately downstream from the branch connection of conduit 161, conduit 74 is fitted with a valve 171 similar to valve 18, and a valve 172 similar to valve 42.

With reference to Fig.1, condenser 12 is a known apparatus which, in this case, provides for lowering the steam pressure and so producing an absolute system vacuum of up to 0.165 bar for drawing in the steam produced in device 11 which, as stated, also flows through device 4.

Condenser 12 presents:
inlet 50 for the steam produced in device 11;
a water inlet 173 regulated by a valve 174 similar to valve 18;
an outlet 175 fitted with a conduit 176 in turn fitted with a pump 177 powered by an electric motor 178; and
an outlet 181 fitted with a conduit 182 in turn fitted with a pump 183 powered by an electric motor 184.

The water and non-condensable gases from condenser 12 are extracted respectively by conduits 176 and 182.

Finally, system 1 comprises an electronic control system 185 for controlling the entire operation of system 1; all the safety equipment installed on the system; motors 23, 35, 38, 62, 92, 83, 178, 184, 112, 137, 145 and 164; valves 42, 97, 117 and 172; and device 14.

System 185 is connected to sensors 43, 93, 94, 147 and 168.

Via sensor 43, system 185 controls the amount of sulphuric acid to be fed into conduit 16 for regulating the pH of the product, by comparing the detected pH with a reference pH (usually 4) for the type of product being processed.

Via sensor 93 and valve 42, system 185 regulates recirculation along conduit 41, by comparing the temperature detected by sensor 93 with a predetermined threshold value (preferably 102°C) calculated to ensure correct cooking of the product in device 5. If the detected temperature is below/above the threshold value, valve 42 is opened/closed to allow/shut off recirculation along conduit 41. In other words, system 185 only allows the product to be fed into device 4 and from there into device 5 when the latter presents the required cooking temperature.

Via sensor 94 and valve 97, system 185 regulates recirculation along conduit 95, by comparing the level detected by sensor 94 with a predetermined reference level maintained by system 185 in device 5. If the level detected by sensor 94 is above/below the reference level, valve 97 is closed/opened to shut off/allow recirculation along conduit 95.

Via sensor 147 and valve 117, system 185 regulates flow along conduit 114, by comparing the level detected by sensor 147 with a predetermined reference level maintained by system 185 in device 11. If the level detected by sensor 147 is above/below the reference level, valve 117 is closed/opened to shut off/allow flow along conduit 114.

Via sensor 168 and valve 172, system 185 regulates flow along conduit 74, by comparing the temperature detected by sensor 168 with a predetermined threshold value (preferably 120°C) for the oil fed into device 5. If the temperature detected by sensor 168 is below the threshold value, valve 172 is regulated to allow only a limited amount of oil to flow along conduit 74, the remainder being recirculated along conduit 161 to tank 13. Conversely, valve 172 is regulated so as to feed most of the hot oil along conduit 74.

The process according to the present invention comprises:
a first stage wherein the original product is fed into tank 2;
a second stage wherein the original product is filtered and homogenized by device 3;
a third stage wherein sensor 43 detects the pH of the product, and pump 22 feeds acid into the product for obtaining a predetermined pH value;
a fourth stage wherein the original product is preheated by device 4;
a fifth stage wherein device 5 cooks the original product in vegetable oil (heated to a predetermined temperature by device 14) for evaporating part of the water in the product and so concentrating the same;
a sixth stage wherein device 6 separates the concentrated product from the vegetable oil;
a seventh stage wherein the concentrated product is fed into tank 7, and the vegetable oil into tank 8;
an eighth stage wherein device 11 dehydrates the vegetable oil drawn from tank 8; and
a ninth stage wherein the steam removed from the oil in the eighth stage is fed to steam condenser 12 via device 4 for preheating the original product.

The advantages of the present invention will be clear from the foregoing description.

In particular, the process according to the present invention may be employed for concentrating fresh fodder, as well as waste products of the food and butchering industries, by simply changing the type of tank employed on the system. Tank 2 as described herein is sufficient for processing animal blood. For more solid products, which must be ground into a paste, the first stage in the process will also include a device for crushing the original product. The process according to the present invention involves no loss in product or the biological value of the same, by virtue of it being dried in the absence of oxygen. For certain types of product, therefore, this eliminates respiration and oxidation resulting in the loss of sugar, amino acids, free fatty acids, etc., while others are prevented from decaying and producing ill-smelling gas. In the case of fresh fodder (e.g. alfalfa, beet slices and maize) and waste from the food industry (e.g. squeezed citrus fruit and apple pulp, tomato peel and waste fruit and vegetables), the process according to the present invention provides for salvaging and preserving, for an indefinite period of time, valuable raw materials for the food and pharmaceutical industries, such as beta carotene, vitamin A, D, E and K and xanthophylls. In addition to improving land utilization, the concentration of early-harvested fodder provides for preserving simple sugar, which is readily assimilated by livestock, and for producing a highly digestible, soft-fibre paste, which has been found to bring about a substantial reduction in excrement volume.

In other words, the process according to the present invention provides for extracting liposoluble vitamins and pigmenting substances from the original product, and for stabilizing the same by concentrating the product in vegetable oil at a given temperature. As already stated, the process according to the present invention also provides for recycling, with no air or water pollution, waste products which are either otherwise undisposable or only disposable at considerable cost. Finally, the system implementing the process according to the present invention is cheap to run, by virtue of using the steam produced by the product being processed.

To those skilled in the art it will be clear that changes may be made to both the process and system described and illustrated herein without, however, departing from the scope of the present invention.

For example, for certain products, an additive other than sulphuric acid may be used for varying the pH of the product. Also, the process as described herein may conveniently be used for producing excellent, non-polluting fertilizer, e.g. by reclaiming and concentrating animal, e.g. pig, excrement, thus also solving the pollution problems involved in disposal of the same.

## Claims

1. A process for reclaiming and concentrating selected or combined waste products of the farming, food and butchering industries, comprising the sequence of steps of:
- homogenizing and filtering the original product to obtain a filtrated product;
- detecting the pH of the filtrated product and feeding an acid additive into the raw product to be homogenized and filtered for obtaining a predetermined acid pH value of the filtrated product;
- cooking the treated product in vegetable oil heated to a predetermined temperature for evaporating part of the water in the treated product and concentrating the same; and
- separating the concentrated product from the vegetable oil.

2. A process according to claim 1, characterized in that, after the step of detecting the pH and feeding an acid additive, the filtered product is preheated.

3. A process according to claim 2, characterized in that after said step of separating the concentrated product, the concentrating product is fed into a tank (7) and the vegetable oil separated from the product is dehydrated.

4. A process according to claim 3, characterized in that the steam extracted from the vegetable oil in the dehydration step is fed to a steam condenser for preheating the original product.

5. A process according to at least one of the foregoing claims, characterized in that, before said homogenizing and filtering step, the original product is first mixed with a given quantity of vegetable oil and then crushed and ground.

6. A system (1) for reclaiming and concentrating selected or combined waste products of the farming, food and butchering industries, for carry out the process of claim 1, comprising:
- a homogenizing device (3) receiving a raw product;
- a cooking device (5) downstream of said homogenizing device and receiving the product to be cooked and vegetable oil, said cooking device accommodating a mixing member (87) and cooking and mixing the product in the vegetable oil, for evaporating part of the water in the product and so concentrating the same; and
- a filtering device (6) connected to the output of said cooking device (5) for separating the concentrated product from the vegetable oil,
characterized in that said homogenizing device (3) includes filtering means (25) for feeding said cooking device (5) with a filtrated product; and in that said system further comprises:
- pH sensing means (43) between the homogenizing and the cooking device for sensing the pH value of the filtrated product; and
- acid adding means (22) and control means (185) for feeding an acid additive into the raw product to be filtrated and homogenized for obtaining a predetermined acid pH value thereof.

7. A system according to claim 6, characterized in that it comprises a dehydrating device (11) connected to an oil output (98) of said filtering device (6) for dehydrating the residual oil and extracting steam; a condenser (12) connected to a steam output (60) of said dehydrating device (11) for condensing the steam extracted from the oil; an oil feedback line (141, 153, 74) connecting said dehydrating device (11) to said cooking device (5); and an oil preheating device (14) inserted along said oil feedback line for preheating the oil from said dehydrating device (11).

8. A system according to claim 7, characterized in that it comprises a product preheating device (4) for preheating the filtered product prior to feeding to said cooking device (5), said product preheating device comprising a heat exchanger formed by two parts, a first part (47) channelling the steam from said steam output (60) of said dehydrating device (11) toward said condenser (12), the second part being inserted between said homogenizing device (3) and said cooking device (5) for channelling said filtrated product in hydraulically sealed manner with respect to said first part (47).

9. A system as claimed in Claim 7 and/or 8, characterised by the fact that it comprises a tank (8) for the oil removed from the concentrated product by said filtering device (6); said tank (8) presenting a first oil outlet orifice (113) connected by a first conduit (114) to said dehydrating device (11); and a second outlet orifice (105) for sediment, connected by a second conduit (106) to said cooking device (5).

10. A system as claimed in Claim 8, characterised by the fact that said homogenizing device (3) comprises a first body (24) divided internally by a filtering plate (25) into a first chamber (26) housing mixing blades (33) and spreading blades (34) for spreading the product over said filtering plate (25); and a second chamber (27) having a third outlet orifice (28) from which the product is fed by a third conduit (31) to said product preheating device (4).

11. A system as claimed in Claim 10, characterised by the fact that said mixing blades (33) and said spreading blades (34) are fitted on a rotary shaft (32) powered by a first electric motor (35).

12. A system as claimed in Claim 10 and/or 11, characterised by the fact that said third conduit (31) presents a first pump (37) powered by a second electric motor (38); and that, downstream from said first pump (37), said third conduit (31) is branch connected to a fourth conduit (41) for recirculating the product upstream from said first pump (37); said fourth conduit (41) presenting a first flow regulating valve (42) controlled electrically on the basis of the temperature detected by a first sensor (93) inside said cooking device (5), so as to only allow the product to be fed into said product preheating device (4) and, from there, into said cooking device (5) when said cooking device (5) presents the required cooking temperature.

13. A system as claimed in at least one of the foregoing Claims from 10 to 12, characterised by the fact that said third conduit (31) presents a tap connected to a second sensor (43) of said pH sensing means, said second sensor being connected to a control unit (185) controlling said acid adding means (22); said acid adding means including a second metering pump (22) powered by a third electric motor (23) and inserted on a fifth conduit supplying said homogenizing device.

14. A system as claimed in at least one of the foregoing Claims from 10 to 13, characterised by the fact that said product preheating device (4) comprises:
a second hollow body (47) having a fourth inlet orifice (52) for the steam fed from said dehydrating device (11) along a sixth conduit (59); a fifth orifice (53) from which originates a seventh conduit (49) for feeding steam to said condenser (12); and a sixth outlet orifice (54) for condensate;
at least a third hollow body (48) sealed inside said second body (47) and having a seventh orifice (44) through which the product is fed by said third conduit (31); and an eighth orifice (57) from which originates an eighth conduit (58) for feeding the product to said cooking device (5); and
a screw (63) housed inside said third body (48) for channelling and at the same time mixing the product, and formed on a rotary shaft (61) powered by a fourth electric motor (62).

15. A system as claimed in Claim 14, characterised by the fact that said cooking device (5) comprises:
a fourth hollow body (64) having a ninth orifice (76) from which originates a ninth conduit (77) for channelling the concentrated product to said filtering device (6); and a tenth orifice (84) from which originates a tenth conduit (85) for channelling the steam produced at the cooking stage to said dehydrating device (11);
a container (72) housed inside said fourth body (64) and with the inside of which communicate said second conduit (106), said eighth conduit (58) and an eleventh conduit (74) feeding hot oil from said oil preheating device (14), for cooking and concentrating the product which gradually overflows the top edge of said container (72); and
a member (88, 91) powered by a fifth electric motor (92) for mixing the concentrated product in said fourth body (64).

16. A system as claimed in Claim 15, characterised by the fact that said ninth conduit (77) presents a third pump (82) powered by a sixth electric motor (83); and that, downstream from said third pump (82), said ninth conduit (77) is branch connected to a twelfth conduit (95) for recirculating the product into said fourth body (64); said twelfth conduit (95) presenting a second flow regulating valve (97) controlled electrically on the basis of the concentrated product level detected by a third sensor (94) inside said cooking device (5), so as to maintain a predetermined level inside said cooking device (5).

17. A system as claimed in Claim 15 and/or 16, characterised by the fact that said dehydrating device (11) comprises:
a fifth hollow body (121) divided internally by two parallel plates (124) into a third upper chamber (125), a fourth central chamber (126) and a fifth lower chamber (127), said fourth chamber (126) being sealed hydraulically in relation to the other two;
an eleventh orifice (115) formed in said fifth chamber (127) and through which the oil from said tank (8) is fed by said first conduit (114);
a twelfth orifice (132) formed in said fifth chamber (127) and from which originates a thirteenth conduit (141) for channelling the dehydrated oil to said oil preheating device (14);
a thirteenth orifice (86) formed in said fourth chamber (126) and through which the steam from said cooking device (5) is channelled by said tenth conduit (85);
a fourteenth orifice (134) formed in said fourth chamber (126) and through which condensate is drained off externally;
a fifteenth orifice (133) formed in said fourth chamber (126) and through which steam produced by a hot oil tank (13) is fed by a fourteenth conduit (151);
a sixteenth orifice (60) formed in said third chamber (125) and from which originates said sixth conduit (59) for channelling the steam removed from the oil to said product preheating device (4);
piping (128) running in hydraulically sealed manner through said fourth chamber (126) for enabling hydraulic communication of said third and fifth chambers (125, 127); and
a member (135, 136) powered by a seventh electric motor (137) for circulating oil from said fifth chamber (127) to said third chamber (125) and vice versa.

18. A system as claimed in Claim 17, characterised by the fact that said first conduit (114) presents a third flow regulating valve (117) controlled electrically on the basis of the oil level detected by a fourth sensor (147) inside said dehydrating device (11), so as to maintain a predetermined level inside said dehydrating device (11).

19. A system as claimed in Claim 17 and/or 18, characterised by the fact that said hot oil tank (13) comprises:
a seventeenth orifice (142) to which is connected said thirteenth conduit (141);
an eighteenth orifice (148) from which originates said fourteenth conduit (151);
a nineteenth orifice (155) to which is connected a fifteenth conduit (156) for channelling the oil exceeding a predetermined level in said cooking device (5); and
a twentieth orifice (152) from which originates a sixteenth conduit (153) for channelling oil to said oil preheating device (14).

20. A system as claimed in Claim 19, characterised by the fact that said eleventh conduit (74) is branch connected to a seventeenth conduit (161) connected to said hot oil tank (13); and that, downstream from said branch, said eleventh conduit (74) presents a fourth flow regulating valve (172) controlled electrically on the basis of the temperature detected by a fifth sensor (168) along said seventeenth conduit (161), so that most of the oil is only channelled to said cooking device (5) when the oil presents the required cooking temperature.

21. A system as claimed in the foregoing Claims from 6 to 20, characterised by the fact that it comprises an electronic control system (185) for controlling said motors (23, 35, 38, 62, 92, 83, 137), said valves (42, 97, 117, 172) and said oil preheating device (14), and to which are connected said sensors (43, 93, 94, 147, 168).

22. A system as claimed in at least one of the foregoing Claims from 6 to 21, characterised by the fact that, upstream from said homogenizing device (3), it comprises a seventh device for grinding the product, preferably in a given quantity of vegetable oil.

## Patentansprüche

1. Ein Verfahren zur Rückforderung und Konzentrierung von ausgewählten oder kombinierten Abfallprodukten der landwirtschaftlichen, Nahrungsmittel- oder Schlachtindustrie, das aus der Abfolge folgender Schritte besteht:
- Homogenisieren und Filtrieren des Originalprodukts, um ein filtriertes Produkt zu erhalten;
- Feststellen des pH-Wertes des filtrierten Produkts und Zugabe eines sauren Zusatzstoffes zum zu homogenisierenden und zu filtrierenden Rohprodukt, um einen vorbestimmten sauren pH-Wert des filtrierten Produkts zu erzielen;
- Kochen des behandelten Produkts in Pflanzenöl, das auf eine vorbestimmte Temperatur erhitzt wurde, um einen Teil des im behandelten Produkt enthaltenen Wassers verdampfen zu lassen und selbiges zu konzentrieren; und
- Trennung des konzentrierten Produkts vom Pflanzenöl.

2. Ein Verfahren nach Anspruch 1, das dadurch gekennzeichnet ist, daß nach dem Schritt des Feststellens des pH-Wertes und der Zugabe eines sauren Zusatzstoffes das filtrierte Produkt vorgewärmt wird.

3. Ein Verfahren nach Anspruch 2, das dadurch gekennzeichnet ist, daß nach besagtem Schritt der Trennung des konzentrierten Produkts das konzentrierte Produkt in einen Tank (7) gefüllt wird und das vom Produkt getrennte Pflanzenöl dehydriert wird.

4. Ein Verfahren nach Anspruch 3, das dadurch gekennzeichnet ist, daß der Dampf, der während der Dehydrierungsstufe aus dem Pflanzenöl extrahiert wird, in einen Dampfkondensator zum Vorwärmen des Originalprodukts geleitet wird.

5. Ein Verfahren nach mindestens einem der vorstehenden Ansprüche, das dadurch gekennzeichnet ist, daß vor besagtem Schritt des Homogenisierens und Filtrierens das Originalprodukt zuerst mit einer vorgegebenen Menge von Pflanzenöl gemischt und dann zerquescht und zermahlen wird.

6. Eine Einrichtung (1) zur Rückforderung und Konzentrierung von ausgewählten oder kombinierten Abfallprodukten der landwirtschaftlichen, Nahrungsmittel- oder Schlachtindustrie und zur Durchführung des Verfahrens von Anspruch 1, bestehend aus:
- einem Homogenisierungsgerät (3), das ein Rohprodukt erhält;
- einem Kochgerät (5), das sich in Bezug auf besagtes Homogenisierungsgerät stromab befindet und das das zu kochende Produkt und das Pflanzenöl aufnimmt, wobei besagtes Kochgerät ein Mischerteil (87) enthält und das Produkt im Pflanzenöl kocht und mischt, um einen Teil des im Produkt enthaltenen Wassers zu verdampfen und so selbiges zu konzentrieren; und
- einem Filtriergerät (6), das an den Ausgang von besagtem Kochgerät (5) zur Trennung des konzentrierten Produkts vom Pflanzenöl angeschlossen ist, gekennzeichnet dadurch, daß besagtes Homogenisierungsgerät (3) ein Filtriermittel (25) beinhaltet, das besagtes Kochgerät (5) mit einem filtrierten Produkt versorgt; und dadurch, daß besagte Einrichtung weiterhin umfaßt:
- den pH-Wert erfassende Mittel (43) zwischen dem Homogenisierungsgerät und dem Kochgerät zur Erfassung des pH-Wertes des filtrierten Produkts; und
- saure Zusatzmittel (22) und Steuermittel (185) zur Zugabe eines sauren Zusatzstoffes zum zu filtrierenden und zu homogenisierenden Rohprodukt zur Erzielung eines vorbestimmten sauren pH-Wertes desselben.

7. Eine Einrichtung nach Anspruch 6, die dadurch gekennzeichnet ist, daß sie aus einem Dehydrierungsgerät (11), das an einen für das Öl vorgesehenen Ausgang (98) von besagtem Filtriergerät (6) zum Dehydrieren des restlichen Öls und zur Extraktion des Dampfes angeschlossen ist; einem Kondensator (12), der an den Ausgang für den Dampf von besagtem Dehydrierungsgerät (11) zum Kondensieren des aus dem Öl extrahierten Dampfes angeschlossen ist; einer Ölrückführungsstrecke (141,153,74), die besagtes Dehydrierungsgerät (11) mit besagtem Kochgerät (5) verbindet; und einem Ölvorwärmgerät (14), das in besagte Ölrückführungsstrecke eingesetzt wird, um das aus besagtem Dehydrierungsgerät (11) stammende Öl vorzuwärmen, besteht.

8. Eine Einrichtung nach Anspruch 7, die dadurch gekennzeichnet ist, daß sie aus einem Produktvorwärmgerät (4) besteht, das das filtrierte Produkt vor dem Einfüllen in besagtes Kochgerät (5) vorwärmt, wobei besagtes Produktvorwärmgerät aus einem Wärmetauscher besteht, der aus zwei Teilen gebildet wird, einem ersten Teil (47), das den Dampf aus besagtem Dampfausgang (60) von besagtem Dehydrierungsgerät (11) in Richtung zu besagtem Kondensator (12) weiterleitet, und einem zweiten Teil, das zwischen besagtes Homogenisierungsgerät (3) und besagtes Kochgerät (5) eingesetzt wird, um besagtes filtriertes Produkt auf hydraulisch versiegelte Weise im Hinblick auf besagtes erstes Teil (47) weiterzuleiten.

9. Eine Einrichtung nach Ansprüchen 7 und/oder 8, die dadurch gekennzeichnet ist, daß sie aus einem Tank (8) für das Öl, das aus dem konzentrierten Produkt durch besagtes Filtriergerät (6) entfernt wird, besteht, wobei besagter Tank (8) eine erste Ölauslaßöffnung (113), die über eine erste Leitung (114) mit besagtem Dehydrierungsgerät (11) verbunden ist, und eine zweite Auslaßöffnung (105) für das Sediment aufweist, die über eine zweite Leitung (106) mit besagtem Kochgerät (5) verbunden ist.

10. Eine Einrichtung nach Anspruch 8, die von der Tatsache gekennzeichnet ist, daß besagtes Homogenisierungsgerät (3) aus einem ersten Körper (24) besteht, der innen mittels einer Filtrierscheibe (25) in eine erste Kammer (26), die die Mischerblätter (33) und die Verteilerblätter (34) zum Verteilen des Produkts über besagte Filtrierscheibe (25) beherbergt, und eine zweite Kammer (27) mit einer dritten Auslaßöffnung (28), aus der das Produkt über eine dritte Leitung (31) zu besagtem Produktvorwärmgerät (4) geleitet wird, geteilt wird.

11. Eine Einrichtung nach Anspruch 10, die von der Tatsache gekennzeichnet ist, daß besagte Mischerblätter (33) und besagte Verteilerblätter (34) an einer sich drehenden Welle, die von einem ersten Elektromotor (35) angetrieben wird, befestigt sind.

12. Eine Einrichtung nach den Ansprüchen 10 und/oder 11, die von der Tatsache gekennzeichnet ist, daß besagte dritte Leitung (31) eine erste Pumpe (37), die von einem zweiten Elektromotor (38) angetrieben wird, aufweist, und daß stromab von besagter erster Pumpe (37) besagte dritte Leitung (31) zu einer vierten Leitung (41) für den Rücklauf des Produkts stromauf von besagter erster Pumpe (37) verzweigt, wobei besagte vierte Leitung (41) ein erstes stromregulierendes Ventil (42) aufweist, das elektrisch auf der Basis der Temperatur, die durch einen ersten Sensor (93) innerhalb von besagtem Kochgerät (5) ermittelt wird, gesteuert wird, so daß das Produkt nur in besagtes Vorwärmgerät (4) und von dort in besagtes Kochgerät (5) geleitet wird, wenn besagtes Kochgerät (5) die erforderliche Kochtemperatur aufweist.

13. Eine Einrichtung nach mindestens einem der vorstehenden Ansprüche 10 bis 12, die von der Tatsache gekennzeichnet ist, daß besagte dritte Leitung (31) einen Hahn aufweist, der mit einem zweiten Sensor (43) von besagtem pH-Wert-feststellenden Mittel verbunden ist, wobei besagter zweiter Sensor mit einer Steuereinheit (185) verbunden ist, die besagte saure Zugabemittel (22) steuert; besagte saure Zugabemittel umfassen eine zweite Meßpumpe (22), die von einem dritten Elektromotor (23) angetrieben wird und auf einer fünften Leitung, die besagtes Homogenisierungsgerät versorgt, eingesetzt wird.

14. Eine Einrichtung nach mindestens einem der vorstehenden Ansprüche 10 bis 13, die von der Tatsache gekennzeichnet ist, daß besagtes Produktvorwärmgerät (4) besteht aus:
- einem zweiten Hohlkörper (47) mit einer vierten Einlaßöffnung (52) für den Dampf, der von besagtem Dehydrierungsgerät (11) über eine sechste Leitung (59) zugeführt wird; einer fünften Öffnung (53), von der eine siebente Leitung (49) zur Zufuhr des Dampfes zu besagtem Kondensator (12) ausgeht; und einer sechsten Auslaßöffnung (54) für das Kondensat;
- mindestens einem innerhalb von besagtem zweitem Hohlkörper (47) abgedichteten dritten Hohlkörper (48) mit einer siebenten Öffnung (44), durch die das Produkt über besagte dritte Leitung (31) eingeleitet wird; und einer achten Öffnung (57), von der eine achte Leitung (58) für die Zufuhr des Produkts zu besagtem Kochgerät (5) ausgeht;
- und einer Spirale (63), die in besagtem dritten Körper (48) untergebracht ist, um das Produkt weiterzuleiten und gleichzeitig zu mischen, und die an einer rotierenden Welle (61) gebildet wird, die von einem vierten Elektromotor (62) angetrieben wird.

15. Eine Einrichtung nach Anspruch 14, die von der Tatsache gekennzeichnet ist, daß besagtes Kochgerät (5) besteht aus:
- einem vierten Hohlkörper (64) mit einer neunten Öffnung (76), von der eine neunte Leitung (77) zur Weiterleitung des konzentrierten Produkts zu besagtem Filtriergerät (6) ausgeht; und einer zehnten Öffnung (84), von der eine zehnte Leitung (85) zur Weiterleitung von besagtem Dampf zu besagtem Dehydrierungsgerät (11) in der Kochstufe ausgeht;
- einem Behälter (72), der in besagtem viertem Hohlkörper (64) untergebracht ist und mit dessen Innenseite besagte zweite Leitung (106), besagte achte Leitung (58) und eine elfte Leitung (74), die das heiße Öl von besagtem Ölvorwärmgerät (14) einleitet, stehen, um das Produkt zu kochen und zu konzentrieren, das allmählich über den oberen Rand von besagtem Behälter (72) fließt; und
- einem Teil (88,91) zum Mischen des konzentrierten Produkts in besagtem vierten Körper (64), das von einem fünften Elektromotor (92) angetrieben wird.

16. Eine Einrichtung nach Anspruch 15, die von der Tatsache gekennzeichnet ist, daß besagte neunte Leitung (77) eine dritte Pumpe (82) aufweist, die von einem sechsten Elektromotor (83) angetrieben wird, und daß stromab von besagter dritter Pumpe (82) besagte neunte Leitung zu einer zwölften Leitung (95) verzweigt, um das Produkt in besagten vierten Körper (64) zurückzuleiten, wobei besagte zwölfte Leitung (95) ein zweites stromregulierendes Ventil aufweist, das elektrisch auf der Basis des Pegels des konzentrierten Produkts, der von einem dritten Sensor (94) innerhalb von besagtem Kochgerät (5) erfaßt wird, derart gesteuert wird, daß ein vorbestimmter Pegel in besagtem Kochgerät (5) aufrechterhalten wird.

17. Eine Einrichtung nach Anspruch 15 und/oder 16, die von der Tatsache gekennzeichnet ist, daß besagtes Dehydrierungsgerät (11) besteht aus:
- einem fünften Hohlkörper (121), der innen durch zwei parallele Scheiben (124) in eine dritte obere Kammer (125), eine vierte mittlere Kammer (126) und eine fünfte untere Kammer (127) geteilt wird, wobei besagte vierte Kammer (126) hydraulisch gegenüber den anderen beiden versiegelt ist;
- einer elften Öffnung (115), die in besagter fünfter Kammer (127) gebildet wird und durch die das Öl von besagtem Tank (8) über besagte erste Leitung (114) eingeleitet wird;
- einer zwölften Öffnung (132), die in besagter fünfter Kammer (127) gebildet wird und von der eine dreizehnte Leitung (141) zur Weiterleitung des dehydrierten Öls zu besagtem Ölvorwärmgerät (14) ausgeht;
- einer dreizehnten Öffnung (86), die in besagter vierter Kammer (126) gebildet wird und durch die der Dampf von besagtem Kochgerät (5) über besagte zehnte Leitung (85) weitergeleitet wird;
- einer vierzehnten Öffnung (134), die in besagter vierter Kammer (126) gebildet wird und durch die das Kondensat nach außen abgeleitet wird;
- einer fünfzehnten Öffnung (133), die in besagter vierter Kammer gebildet wird und durch die der Dampf, der vom Tank mit dem heißen Öl (13) erzeugt wird, über eine vierzehnte Leitung (151) eingeleitet wird;
- einer sechzehnten Öffnung (60), die in besagter dritter Kammer (125) gebildet wird, und von der besagte sechste Leitung (59) ausgeht, um den Dampf, der aus dem Öl entfernt wurde, zu besagtem Produktvorwärmgerät (4) weiterzuleiten;
- einem Röhrensystem (128), das auf hydraulisch versiegelte Weise durch besagte vierte Kammer (126) führt, um die hydraulische Verbindung von besagter vierter und fünfter Kammer (125,127) zu ermöglichen; und
- einem Teil (135,136), das von einem siebenten Elektromotor (137) angetrieben wird, um das Öl von besagter fünfter Kammer (127) zu besagter dritter Kammer und umgekehrt zu zirkulieren.

18. Eine Einrichtung nach Anspruch 17, die von der Tatsache gekennzeichnet ist, daß besagte erste Leitung (114) ein drittes stromregulierendes Ventil (117) aufweist, das elektrisch auf der Basis des Ölstandes, der von einem vierten Sensor (147) innerhalb von besagtem Dehydrierungsgerät (11) erfaßt wird, derart gesteuert wird, daß ein vorbestimmter Pegel innerhalb von besagtem Dehydrierungsgerät (11) aufrechterhalten wird.

19. Eine Einrichtung nach Anspruch 17 und/oder 18, die von der Tatsache gekennzeichnet ist, daß besagter Heißöltank (13) besteht aus:
- einer siebzehnten Öffnung (142), an die besagte dreizehnte Leitung (141) angeschlossen ist;
- einer achtzehnten Öffnung (148), von der besagte vierzehnte Leitung (151) ausgeht;
- einer neunzehnten Öffnung (155), an die eine fünfzehnte Leitung (156) zur Weiterleitung des Öls, das einen vorbestimmten Pegel in besagtem Kochgerät (5) übersteigt, angeschlossen ist;
- und einer zwanzigsten Öffnung (152), von der eine sechzehnte Leitung (153) zur Weiterleitung des Öls zu besagtem Ölvorwärmgerät (14) ausgeht.

20. Eine Einrichtung nach Anspruch 19, die von der Tatsache gekennzeichnet ist, daß besagte elfte Leitung (74) zu einer siebzehnten Leitung (161) verzweigt, die mit besagtem Heißöltank (13) verbunden ist, und daß stromab von besagter Verzweigung besagte elfte Leitung (74) ein viertes stromregulierendes Ventil (172) aufweist, das elektrisch auf der Grundlage der Temperatur, die von einem fünften Sensor (168) entlang besagter siebzehnter Leitung (161) ermittelt wird, derart gesteuert wird, daß der größte Teil des Öls nur dann zu besagtem Kochgerät (5) weitergeleitet wird, wenn das Öl die erforderliche Kochtemperatur aufweist.

21. Eine Einrichtung nach den vorstehenden Ansprüchen 6 bis 20, die von der Tatsache gekennzeichnet ist, daß sie ein elektronisches Steuersystem (185) zur Steuerung besagter Motoren (23,35,38,62,92,83,137), besagter Ventile (42, 97,117,172) und besagten Ölvorwärmgerätes (14) enthält, und mit dem besagte Sensoren (43,93,94,147,168) verbunden sind.

22. Eine Einrichtung nach mindestens einem der vorstehenden Ansprüche 6 bis 21, die von der Tatsache gekennzeichnet ist, daß sie stromauf von besagtem Homogeniesierungsgerät (3) ein siebentes Gerät zum Zermahlen des Produkts, das sich vorzugsweise in einer vorgegebenen Menge von Pflanzenöl befindet, beinhaltet.

## Revendications

1. Procédé pour récupérer et concentrer des déchets sélectionnés ou combinés de l'industrie agricole, de l'industrie alimentaire et de l'industrie de la viande, comprenant la séquence d'étapes consistant à :
- homogénéiser et filtrer le produit original pour obtenir un produit filtré;
- détecter le pH du produit filtré et introduire un additif acide dans le produit brut devant être homogénéisé et filtré, pour obtenir une valeur acide prédéterminée du pH du produit filtré;
- faire cuire le produit traité dans de l'huile végétale chauffée à une température prédéterminée pour évaporer une partie de l'eau située dans le produit traité et concentrer ce dernier; et
- séparer le produit concentré, de l'huile végétale.

2. Procédé selon la revendication 1, caractérisé en ce qu'après l'étape de détection du pH et de l'envoi d'un additif acide, on réalise un préchauffage du produit filtré.

3. Procédé selon la revendication 2, caractérisé en ce qu'après ladite étape de séparation du produit concentré, on place le produit concentré dans un réservoir (7) et on déshydrate l'huile végétale, séparée du produit.

4. Procédé selon la revendication 3, caractérisé en ce qu'on envoie la vapeur extraite de l'huile végétale, obtenue lors de l'étape de déshydratation, à un condenseur de vapeur pour préchauffer le produit original.

5. Procédé selon au moins l'une des revendications précédentes, caractérisé en ce qu'avant l'étape d'homogénéisation et de filtrage, on mélange tout d'abord au produit original une quantité donnée d'huile végétale, puis on écrase et on broie le produit.

6. Système (1) pour récupérer et concentrer des déchets sélectionnés ou combinés de l'industrie agricole, de l'industrie alimentaire et de l'industrie de la viande, pour la mise en oeuvre du procédé selon la revendication 1, comprenant :
- un dispositif d'homogénéisation (3) recevant un produit brut;
- un dispositif de cuisson (5) disposé en aval du dispositif d'homogénéisation et recevant le produit devant être cuit et de l'huile végétale, ledit dispositif de cuisson contenant un organe de mélange (87) et cuisant et mélangeant le produit dans l'huile végétale, pour évaporer une partie de l'eau située dans le produit et ainsi concentrer ce dernier;
- un dispositif de filtrage (6) raccordé à la sortie dudit dispositif de cuisson (5) pour séparer le produit concentré, de l'huile végétale,
caractérisé en ce que ledit dispositif d'homogénéisation (3) contient des moyens de filtrage (25) pour envoyer un produit filtré audit dispositif de cuisson (5); et en ce que ledit système comporte en outre :
- des moyens (43) de détection du pH, disposés entre le dispositif d'homogénéisation et le dispositif de cuisson, pour détecter la valeur du pH du produit filtré; et
- des moyens d'addition d'acide (22) et des moyens de commande (185) servant à introduire un additif acide dans le produit brut devant être filtré et homogénéisé, pour obtenir une valeur de pH acide prédéterminée de ce produit.

7. Système selon la revendication 6, caractérisé en ce qu'il comprend un dispositif de déshydratation (11) raccordé à une sortie d'huile (98) dudit dispositif de filtrage (6) pour déshydrater l'huile résiduelle et extraire la vapeur; un condensateur (12) raccordé à une sortie de vapeur (60) dudit dispositif de déshydratation (11) pour condenser la vapeur extraite de l'huile; une canalisation de renvoi d'huile (141, 153, 74) raccordant ledit dispositif de déshydratation (11) audit dispositif de cuisson (5); et
un dispositif de préchauffage (14) inséré dans ladite canalisation de retour d'huile pour le préchauffage de l'huile provenant dudit dispositif de déshydratation (11).

8. Système selon la revendication 7, caractérisé en ce qu'il comprend un dispositif de préchauffage de produit (4) pour préchauffer le produit filtré avant qu'il soit envoyé audit dispositif de cuisson (5), ledit dispositif de préchauffage de produit comprenant un échangeur de chaleur formé de deux parties, une première partie (47) canalisant la vapeur provenant de ladite sortie de vapeur (20) dudit dispositif de déshydratation (11) en direction dudit condenseur (12), tandis que la seconde partie est insérée entre ledit dispositif d'homogénéisation (3) et ledit dispositif de cuisson (5) pour canaliser ledit produit filtré d'une manière étanche du point de vue hydraulique par rapport à ladite première partie (47).

9. Système selon la revendication 7 et/ou 8, caractérisé en ce qu'il comprend un réservoir (8) pour l'huile retirée du produit concentré par ledit dispositif de filtrage (6); ledit réservoir (8) possédant un premier orifice de sortie d'huile (113) raccordé par une première canalisation (14) audit dispositif de déshydratation (11); et un second orifice de sortie (105) pour le sédiment, raccordée par une seconde canalisation (106) audit dispositif de cuisson (5).

10. Système selon la revendication 8, caractérisé en ce que ledit dispositif d'homogénéisation (3) comprend un premier corps (24) divisé intérieurement par une plaque de filtrage (25) en une première chambre (26) logeant des pales de mélange (33) et des pales d'étalement (34) pour l'étalement du produit sur ladite plaque de filtrage (25); et une seconde chambre (27) possédant un troisième orifice de sortie (28), d'où le produit est envoyé par une troisième canalisation (31) audit dispositif de préchauffage de produit (4).

11. Système selon la revendication 10, caractérisé en ce que lesdites pales de mélange (22) et lesdites pales d'étalement (34) sont montées sur un arbre rotatif (32) alimenté par un premier moteur électrique (35).

12. Système selon la revendication 10 et/ou 11, caractérisé en ce que ladite troisième canalisation (31) comporte une première pompe (37) entrainée par un second moteur électrique (38); et en ce qu'en aval de ladite première pompe (37), ladite troisième canalisation (31) est branchée en dérivation sur une quatrième canalisation (41) pour faire recirculer le produit en amont de ladite première pompe (37); ladite quatrième canalisation (41) possédant une première soupape (42) de régulation du débit, qui est commandée électriquement sur la base de la température détectée par un premier capteur (93) situé à l'intérieur dudit dispositif de cuisson (5), de manière à permettre uniquement l'introduction du produit dans ledit dispositif de préchauffage de produit (14), et, à partir de là, dans ledit dispositif de cuisson (5), lorsque ledit dispositif de cuisson (5) possède la température de cuisson requise.

13. Système selon au moins l'une des revendications précédentes 10 à 12, caractérisé en ce que ladite troisième canalisation (31) possède une prise raccordée à un second capteur (43) desdits moyens de détection du pH, ledit second capteur étant raccordé à une unité de commande (185) commandant lesdits moyens d'addition d'acide (22); lesdits moyens d'addition d'acide comprenant une seconde pompe de dosage (22) entraînée par un troisième moteur électrique (23) et insérée dans une cinquième canalisation alimentant ledit dispositif d' homogénéisation.

14. Système selon au moins l'une des revendications précédentes 10 à 13, caractérisé en ce que ledit dispositif de préchauffage de produit (4) comprend :
un second corps creux (47) possédant un quatrième orifice d'entrée (52) pour la vapeur envoyée par ledit dispositif de déshydratation (11) dans une sixième canalisation (59); un cinquième orifice (53) à partir duquel s'étend une septième canalisation (49) servant à envoyer de la vapeur audit condenseur (12); et un sixième orifice de sortie (54) pour le condensat;
au moins un troisième corps creux (48) enfermé de façon étanche à l'intérieur dudit second corps (47) et possédant un septième orifice (44) que traverse le produit qui est délivré par ladite troisième canalisation (31); et un huitième orifice (57), à partir duquel s'étend une huitième canalisation (58) servant à envoyer le produit audit dispositif de cuisson (5); et
une vis (63) logée à l'intérieur du troisième corps (48) pour canaliser et simultanément mélanger le produit, et formée sur un arbre rotatif (61) alimenté par un quatrième moteur électrique (62).

15. Système selon la revendication 14, caractérisé en ce que ledit dispositif de cuisson (5) comprend :
un quatrième corps creux (64) possédant un neuvième orifice (76), à partir duquel s'étend une neuvième canalisation (77) servant à canaliser le produit concentré en direction dudit dispositif de filtrage (6); et un dixième orifice (84), d'où part une dixième canalisation (85) servant à canaliser la vapeur produite dans l'étage de cuisson en direction dudit dispositif de déshydratation (11);
un récipient (72) logé à l'intérieur dudit quatrième corps (64) et avec l'intérieur duquel communique ladite seconde canalisation (106), ladite huitième canalisation (58) et une onzième canalisation (74) envoyant de l'huile chaude à partir dudit dispositif de préchauffage d'huile (14) pour chauffer et concentrer le produit, qui s'échappe graduellement par-dessus le bord supérieur dudit récipient (72); et un organe (88,91) entraîné par un cinquième moteur électrique (92) pour mélanger le produit concentré dans ledit quatrième corps (64).

16. Système selon la revendication 15, caractérisé en ce que ladite neuvième canalisation (77) comporte une troisième pompe (82) entraînée par un sixième moteur électrique (83); et en ce que, en aval de ladite troisième pompe (82), ladite neuvième canalisation (77) est raccordée en dérivation à une douzième canalisation (95) pour introduire par recirculation le produit dans ledit quatrième corps (64); ladite douzième canalisation (95) possédant une seconde soupape de régulation de débit (97) commandée électriquement sur la base du niveau du produit concentré détecté par un troisième capteur (94) à l'intérieur dudit dispositif de cuisson (5), de manière à maintenir un niveau prédéterminé à l'intérieur dudit dispositif de cuisson (5).

17. Système selon la revendication 15 et/ou 16, caractérisé en ce que ledit dispositif de déshydratation (11) comprend :
un cinquième corps creux (121) divisé intérieurement par deux plaques parallèles (124) en une troisième chambre supérieure (125) et une quatrième chambre centrale (126) et une cinquième chambre inférieure (127), ladite quatrième chambre (126) étant fermée d'une manière étanche du point de vue hydraulique par rapport aux deux autres chambres;
un onzième orifice (115) formé dans ladite cinquième chambre (127) et par lequel l'huile provenant dudit réservoir (8) est introduite par ladite première canalisation (114);
un douzième orifice (132) ménagé dans ladite cinquième chambre (127) à partir duquel s'étend une treizième canalisation (141) servant à canaliser l'huile déshydratée en direction dudit dispositif de préchauffage d'huile (14);
un treizième orifice (86) formé dans ladite quatrième chambre (126) et par lequel la vapeur provenant dudit dispositif de cuisson (5) est canalisée par ladite dixième canalisation (85);
un quatorzième orifice (134) formé dans ladite quatrième chambre (126) et par lequel le condensat est évacué vers l'extérieur;
un quinzième orifice (133) ménagé dans ladite quatrième chambre (126) et par lequel de la vapeur produite par ledit réservoir d'huile chaude (113) est envoyée dans une quatorzième canalisation (151);
un seizième orifice (60) ménagé dans ladite première chambre (125) et à partir duquel s'étend une sixième canalisation (59) pour canaliser la vapeur retirée de l'huile, dudit dispositif de chauffage de produit (4);
une canalisation (128) qui traverse, d'une manière hermétique du point de vue hydraulique, ladite quatrième chambre (126) pour permettre une communication hydraulique entre lesdites troisième et cinquième chambres (125, 127); et
un organe (135,136) entraîné par un septième moteur électrique (137) pour faire circuler l'huile depuis ladite cinquième chambre (127) en direction de ladite troisième chambre (125) et vice versa.

18. Système selon la revendication 17, caractérisé en ce que ladite première canalisation (114) représente une troisième soupape de régulation de débit (117) commandée électriquement sur la base du niveau d'huile détecté par un quatrième détecteur (147) à l'intérieur dudit dispositif de déshydratation (11) de manière à maintenir un niveau prédéterminé à l'intérieur dudit dispositif de déshydratation (11).

19. Système selon la revendication 17 et/ou 18, caractérisé par le fait que ledit réservoir d'huile chaude (13) comprend :
ledit septième orifice (142) auquel est raccordé ladite treizième canalisation (141);
un dix-huitième orifice (148), à partir duquel s'étend ladite quatorzième canalisation (151);
un dix-neuvième orifice (155) dans lequel est raccordé une quinzième canalisation (156) servant à canaliser l'huile et passant à un niveau prédéterminé dans ledit dispositif de cuisson (5); et
un vingtième orifice (152) à partir duquel s'étend une seizième canalisation (153) servant à canaliser de l'huile en direction dudit dispositif de préchauffage d'huile (14).

20. Système selon la revendication 19, caractérisé en ce que ladite onzième canalisation (74) est raccordée en dérivation à une dix-septième canalisation (161) raccordée audit réservoir d'huile chaude (13); et que, en aval de ladite dérivation, ladite neuvième canalisation (74) représente une quatrième soupape de régulation de débit (172) commandée électriquement sur la base de la température détectée par un cinquième capteur (168) le long de ladite dix-septième canalisation (161), de sorte que la majeure partie de l'huile est uniquement canalisée en direction dudit dispositif de cuisson (5), lorsque l'huile présente une température de cuisson requise.

21. Système selon l'une des revendications précédentes 6 à 20, caractérisé en ce qu'il comprend un système de commande électronique (185) servant à commander lesdits moteurs (23,35,38,62,92,83,137), lesdites soupapes (42,97,117,172) et ledit dispositif de préchauffage d'huile (14), et auquel sont raccordés lesdits capteurs (43,93,94, 147,168).

22. Système selon au moins l'une des revendications précédentes 6 à 21, caractérisé en ce qu'en amont dudit dispositif d'homogénéisation (3), il comprend un septième dispositif servant à broyer le produit, de préférence dans une quantité donnée d'huile végétale.
